# EUROPEAN PATENT APPLICATION

(11) **EP 3 782 815 A1**
(43) Date of publication of application: **24.02.2021**
(21) Application number: 19192322.6
(22) Date of filing: 19.08.2019
(51) Int. Cl.: B33Y 80/00, A61C 13/01, A61C 13/10, A61C 13/00, A61C 5/70

(54) **METHOD OF PRODUCING A DENTAL PROSTHESIS**

(71) Applicant: DENTSPLY SIRONA Inc., York, PA 17401 (US); Sirona Dental Systems GmbH, 64625 Bensheim (DE)
(72) Inventor: Fornoff, Peter, 64625 Bensheim (DE); Stahl, Christian, 64625 Bensheim (DE)
(74) Representative: Özer, Alpdeniz

(57) **Abstract**

The present invention relates to a method of producing a dental prosthesis (1). The method comprises: a step of additively manufacturing a denture base (2) in a single piece. The method is characterized by further comprising: a step of additively manufacturing tooth cores (3) in a single piece; and a step of manufacturing tooth covers (4) for covering the tooth cores (3) respectively.

## Description

### TECHNICAL FIELD OF THE INVENTION

The present invention relates to a dental prosthesis. The present invention more particularly relates to a method of producing a dental prosthesis.

### BACKGROUND ART OF THE INVENTION

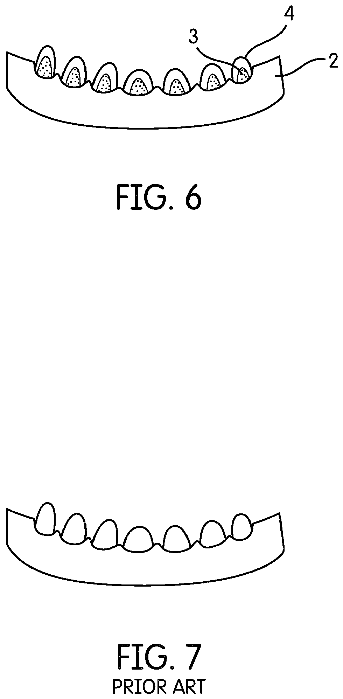

In established methods of producing full dental prosthesis through 3D printing, only the denture bases are generally produced through 3D printing. Thereafter, the 3D printed denture bases are fitted with artificial teeth that have been produced through manufacturing processes other than 3D printing as shown in Fig. 7. The methods of producing full dental prostheses in which the teeth are also produced through 3D printing have not yet achieved satisfactory aesthetics. In the methods of producing full dental prostheses only through 3D printing, the monochromacy of the components produced in the 3D printing is a major obstacle in achieving aesthetically convincing results. For instance, if the full dental prostheses is assembled from a pink gingiva component i.e., the denture base, and synthetic teeth which have all been produced through the 3D printing, the appearance of natural teeth cannot be satisfactorily imitated.

### DISCLOSURE OF THE INVENTION

An objective of the present invention is to overcome the disadvantages of the prior art and provide a method of producing a dental prothesis that allows more freedom to design and can achieve sufficiently aesthetic results.

This objective has been achieved by the method as defined in claim 1. The subject-matters of the dependent claims relate to further developments.

The present invention provides a method of producing a dental prosthesis. The method comprises: a step of additively manufacturing a denture base in a single piece; a step of additively manufacturing tooth cores in a single piece; and a step of manufacturing tooth covers for covering the tooth cores respectively.

A major advantageous effect of the present method is that the full dental prosthesis includes at least three pieces which can be produced in different shades and with different aesthetic material characteristics, and thus the design features of the multiple pieces allow highly esthetic results to be achieved compared to the above-mentioned prior art methods. Another major advantageous effect of the present method is that the tooth cores are manufactured as a single piece. Thereby any misalignments during the assembly process can be prevented as much as possible, and a pleasant bite can be achieved. Thereby, also the assembly process can be accelerated, and the appearance can be improved. Thereby, also the robustness of the dental prosthesis can be increased.

According to the present invention, the tooth covers are preferably additively manufactured through 3D printing. Alternatively, the tooth covers may be subtractively manufactured through machining from a dental blank.

According to the present invention, the tooth covers are preferably manufactured in a single piece. Alternatively, the tooth covers may be manufactured in multiple pieces. Since the tooth cores are manufactured as a single piece the assembly of the tooth covers with the tooth cores can be easily and correctly performed. The tooth covers completely cover the tooth cores emerging out of the denture base. Alternatively, the tooth covers may cover only the front surfaces and the upper surfaces of the tooth cores emerging out of the denture base.

According to the present invention, the denture base and the tooth cores are preferably manufactured to form-fittingly join each other. Similarly, the tooth cores and the tooth covers are also preferably manufactured to form-fittingly join each other. Thereby, the denture base, the tooth cores and the tooth covers can be easily and correctly assembled.

According to the present invention, the tooth covers are preferably manufactured from a material that is at least partially transparent. Thereby the tooth cores can be seen with some degree of coloration, thus a natural appearance can be achieved.

According to the present invention, the method further preferably comprises a step of determining a target coloration of the tooth cores based on the thickness of the tooth covers and the geometry of the tooth cores. Thereby the target coloration can be adjusted in accordance with the customers desire.

According to the present invention, the assembly of the dental prosthesis is performed in two major steps. In the first step, the denture base and the tooth cores are joined preferably through adhesion, or polymerization, or a mechanical click connection. The mechanical click connection is preferably manufactured integrally with the denture base and the tooth cores. In the second step, the tooth cores and the tooth covers are preferably joined through adhesion, or polymerization, or a mechanical click-connection. Here also the mechanical click-connection is preferably manufactured integrally with the tooth cores and the tooth covers.

According to the present invention, at least one of the denture base, the tooth cores, the tooth covers are preferably manufactured integrally with adhesive reservoirs for receiving excessive adhesives. Thereby, the dental prosthesis can be assembled without adhesive residues.

According to the present invention, the adhesive is preferably at least partially transparent. Thereby the target coloration can be further determined through the material of the adhesive and/or the geometry of the adhesive reservoirs.

According to the present invention, the denture base and the tooth cores are preferably manufactured integrally with one or more tongues and grooves respectively for mutual connection. Similarly, the tooth cores and the tooth covers are preferably manufactured integrally with one or more tongues and grooves respectively for mutual connection. Thereby, the mechanical click connection can be safely realized.

According to the present invention, the method can be used to produce the dental prosthesis as a full dental prosthesis or a partial dental prosthesis in accordance with the customers need.

The present invention also provides a computer-based manufacturing system for manufacturing a dental prosthesis. The manufacturing system comprises at least an additive manufacturing unit such as a 3D printer and/or a subtractive manufacturing unit such as a machining unit. The control unit of the computer-based manufacturing system is adapted to execute the steps of the present method in accordance with a computer program having computer-readable codes. The computer program may be separately provided on a computer readable storage.

### BRIEF DESCRIPTION OF THE DRAWINGS

In the subsequent description, further aspects and advantageous effects of the present invention will be described in more detail by using exemplary embodiments and referring to the drawings, wherein
Fig. 1 - is a schematic view of the denture base according to an embodiment of the present invention;
Fig. 2 - is a schematic view of the tooth cores according to an embodiment of the present invention;
Fig. 3 - is a schematic view of the tooth covers according to an embodiment of the present invention;
Fig. 4 - is a schematic view of the denture base and the tooth cores form-fittingly joined according to an embodiment of the present invention, wherein the dashed lines show the joining parts;
Fig. 5 - is a schematic view of the denture base, the tooth cores and the tooth covers form-fittingly joined according to an embodiment of the present invention, wherein the dashed lines show the joining parts;
Fig. 6 - is a schematic view of the full dental prosthesis of Fig. 5, without the dashed-lines;
Fig. 7 - is a schematic view of a full dental prostheses according to the prior art.

The reference numbers shown in the drawings denote the elements as listed below and will be referred to in the subsequent description of the exemplary embodiments:
1. Dental prosthesis
2. Denture base
3. Tooth cores
4. Tooth cover

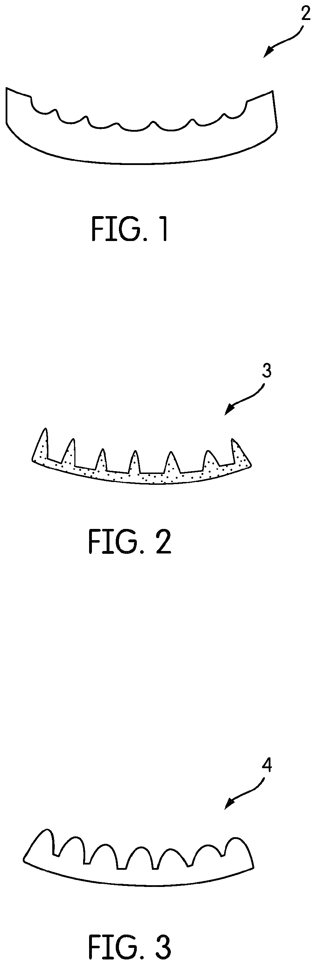

Fig. 6 shows a dental prosthesis (1) which has been produced with a method according to an embodiment of the present invention. The dental prosthesis (1) is assembled from three components namely, the denture base (2), the tooth cores (3) and the tooth covers (4) that completely cover the tooth cores (3) respectively. Fig. 1 shows the denture base (2) according to an embodiment of the present invention. The denture base (2) is additively manufactured in a single piece which is the gingiva component. Fig. 2 shows the tooth cores (3) according to an embodiment of the present invention. The tooth cores (3) are also additively manufactured in a single piece. Fig. 3 shows the tooth covers (4) according to an embodiment of the present invention. The tooth covers (4) are manufactured to cover the tooth cores (3) respectively. The tooth covers (4) are also additively manufactured. Alternatively, the tooth covers (4) may be subtractively manufactured. As shown in Fig. 3, the tooth covers (4) are manufactured in a single piece. Alternatively, the tooth covers (4) may be manufactured in multiple pieces.

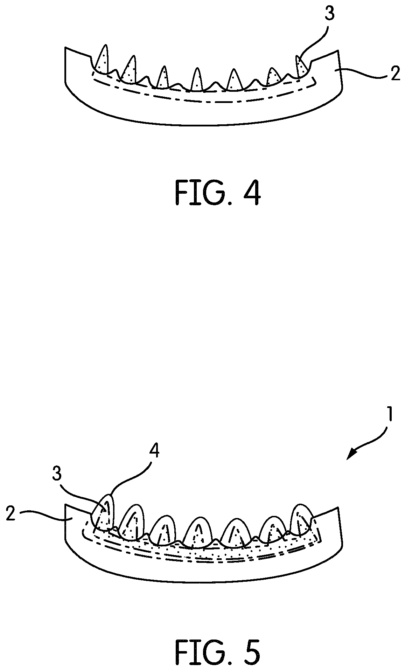

As shown in Fig. 4, the denture base (2) and the tooth cores (3) are manufactured to form-fittingly join each other. When assembling the two components, the assembly person can easily join the tooth cores (3) in correct alignment with the denture base (2). The denture base (2) and the tooth cores (3) may be joined in various ways, for example, through adhesion, or polymerization, or a mechanical click connection. For the case of joining the denture base (2) and the tooth cores (3) through adhesion, at least one of the denture base (2) and the tooth cores (3) are preferably manufactured integrally with adhesive reservoirs for receiving any excessive adhesives. For the case of joining the denture base (2) and the tooth cores (3) through the mechanical click connection, the mechanical click connection is preferably manufactured integrally with the denture base (2) and the tooth cores (3). The denture base (2) and the tooth cores (3) are preferably manufactured integrally with one or more tongues and grooves respectively for mutual connection.

As shown in Fig. 5, the tooth cores (3) and the tooth covers (4) are also manufactured to form-fittingly join each other. When assembling the two components the assembly person can easily join the tooth cores (3) in correct alignment with the tooth covers (4). The tooth cores (3) and the tooth covers (4) may also be joined in various ways for example through adhesion, or polymerization, or a mechanical click-connection. For the case of joining the tooth cores (3) and the tooth covers (4) through adhesion, at least one of the tooth cores (3) and the tooth covers (4) are preferably manufactured integrally with adhesive reservoirs for receiving any excessive adhesives. For the case of joining the tooth cores (3) and the tooth covers (4) through the mechanical click connection, the mechanical click connection is preferably manufactured integrally with the tooth cores (3) and the tooth covers (4). The tooth cores (3) and the tooth covers (4) are preferably manufactured integrally with one or more tongues and grooves respectively for mutual connection. When assembling the three components, the assembly person joins the denture base (2), the tooth cores (3) and the tooth covers (4) in the given order.

As shown in Fig. 6, the tooth cores (3) can be seen through the tooth covers (4) which have been manufactured from a material that is at least partially transparent. Thereby some degree of coloration of the tooth cores (3) can be attained, and thus the dental prothesis (1) receives a natural appearance. The target coloration of the tooth cores (3) can be determined through the degree of transparency and thickness of the tooth covers (4) and the geometry and material characteristics of the tooth cores (3). In addition, the adhesive is preferably at least partially transparent. And the target coloration is further determined through the material of the adhesive and the geometry of the adhesive reservoirs.

## Claims

1. A method of producing a dental prosthesis (1), comprising:
a step of additively manufacturing a denture base (2) in a single piece;
**characterized by** further comprising:
a step of additively manufacturing tooth cores (3) in a single piece; and
a step of manufacturing tooth covers (4) for covering the tooth cores (3) respectively.

2. The method according to claim 1, **characterized in that** the tooth covers (4) are additively or subtractively manufactured.

3. The method according to claim 2, **characterized in that** the tooth covers (4) are manufactured in a single piece or multiple pieces.

4. The method according to any one of claims 1 to 3 , **characterized in that** the denture base (2) and the tooth cores (3) are manufactured to form-fittingly join each other.

5. The method according to any one of claims 1 to 4, **characterized in that** the tooth cores (3) and the tooth covers (4) are manufactured to form-fittingly join each other.

6. The method according to any one of claims 1 to 5, **characterized in that** the tooth covers (4) are manufactured from a material that is at least partially transparent.

7. The method according to claim 6, **characterized by** further comprising: a step of determining a target coloration of the tooth cores (3) based on the thickness of the tooth covers (4) and the geometry of the tooth cores (3).

8. The method according to any one of claims 1 to 7, **characterized by** further comprising: a first step of joining the denture base (2) and the tooth cores (3) through adhesion, or polymerization, or a mechanical click connection, wherein the mechanical click connection is manufactured integrally with the denture base (2) and the tooth cores (3).

9. The method according to any one of claims 1 to 8, **characterized by** further comprising: a second step of joining the tooth cores (3) and the tooth covers (4) through adhesion, or polymerization, or a mechanical click-connection, wherein the mechanical click-connection is manufactured integrally with the tooth cores (3) and the tooth covers (4).

10. The method according to claim 8 or 9, **characterized in that** at least one of the denture base (2), the tooth cores (3), the tooth covers (4) are manufactured integrally with adhesive reservoirs for receiving excessive adhesives.

11. The method according to claim 10, **characterized in that** the adhesive is at least partially transparent, wherein the target coloration is determined through the material of the adhesive and/or the geometry of the adhesive reservoirs.

12. The method according to any one of claims 8 to 11, **characterized in that** the denture base (2) and the tooth cores (3) are manufactured integrally with one or more tongues and grooves respectively for mutual connection.

13. The method according to any one of claims 8 to 11, **characterized in that** the tooth cores (3) and the tooth covers (4) are manufactured integrally with one or more tongues and grooves respectively for mutual connection.

14. The method according to any one of claims 1 to 13, **characterized in that** the dental prosthesis (1) is a full dental prosthesis (1) or a partial dental prosthesis.

15. A computer-based manufacturing system for manufacturing a dental prosthesis (1), comprising a control unit adapted to execute the steps of the method according to any one of claims 1 to 14.

16. A computer program comprising computer readable codes which cause a computer-based manufacturing system to carry out the steps according to any one of claims 1 to 14.

17. A computer readable storage comprising the computer program according to claim 16.
